# EUROPEAN PATENT SPECIFICATION

(11) **EP 0 402 102 B1**
(45) Date of publication and mention of the grant of the patent: **24.08.1994**
(21) Application number: 90306103.4
(22) Date of filing: 05.06.1990
(51) Int. Cl.: C09G 3/00, A61C 11/08

(54) **Ski wax material in the form of a sheet**
Skiwachs-Material in der Form einer Folie
Fart en forme de feuille

(30) Priority: 07.06.1989 JP 65842/89 U; 08.08.1989 JP 93149/89 U; 24.10.1989 JP 124940/89 U
(43) Date of publication of application: 12.12.1990
(73) Proprietor: Shinozuka, Shoichi, Higashi-Kurume-shi, Tokyo (JP); ASICS CORPORATION, Chuo-ku Kobe-shi Hyogo-ken (JP)
(72) Inventor: Shinozuka, Shoichi, Tokyo (JP)
(74) Representative: Linn, Samuel Jonathan

(56) References cited:
- EP-A- 0 308 360
- US-A- 4 308 633

## Description

This invention relates to a ski wax material. More particularly, it relates to a ski wax material in the form of a sheet, which is used for waxing a sliding surface of ski to improve the sliding properties thereof.

Hitherto, widely used as a ski wax material has been so-called "hot wax", which is produced in the form of a solid mass having a desired shape such as cubic and cylindrical forms. To wax a ski the hot wax is once melted by heat, applied to the sliding surface of the ski and then solidified by cooling to form a wax layer on the sliding surface.

The waxing of ski using the hot wax is generally carried out as follows. The ski is placed in such a position that its sliding surface faces upward and the hot wax is melted over the sliding surface by being in contact with an iron at a temperature above the melting point of the wax to melt and drop the wax on the sliding surface as widely as possible. Then, the dropped wax is spread with the heated surface of the iron by sliding the iron along the sliding surface of the ski to form a wax layer thereon. Lastly, after the wax is solidified by cooling, the excessive wax on the sliding surface is removed by a wax-scraper to form a flat wax layer having a suitable thickness.

However, the waxing operation using the hot wax involves several drawbacks such as the followings.
a) The wax layer obtained by spreading the wax by the iron can not have sufficiently even surface because the thickness of the wax layer formed between the hard surface of the iron and sliding surface varies easily depending on the pressure applied by the iron. Further, the thickness of the wax layer may vary depending on the temperature of the sliding surface. Therefore, a laborious operation of scraping off the excessive wax becomes inevitable in order to obtain a smooth sliding surface.
b) When spreading the wax by the iron, it is quite difficult to completely prevent the heated surface of the iron from directly contacting with the sliding surface to thermally damage the sliding surface by, for example, burning the sliding surface. Particularly, so-called "Black Sole" which has a poor heat resistance is readily damaged by the heated surface of the iron.
c) When heat-melting the mass of the wax by pressing it against the heated surface of the iron to melt and drop it onto the sliding surface, the amount of the wax firstly dropped on the surface may be adjusted so as to cover the whole sliding surface with a suitable thickness by varying the pressing strength, depending on the temperature of the iron and atmospheric temperature. However, such operation requires a highly skilled technique, and therefore the sliding surface is usually applied with excessive wax. Consequently, it is impossible to avoid much loss of the wax as well as much labor for removing the excessive wax.

On the other hand, EP-A-260276 proposed a ski wax material consisting of a fibrous material impregnated with liquid ski wax prepared by dissolving a ski wax component in an organic solvent. However, by using this wax material, only a very small amount of the wax can be applied to the sliding surface, and the applied wax does not sufficiently penetrate into streaks existing on the sliding surface since the wax is not heated during the waxing at all. Therefore, neither sufficiently improved sliding properties nor a relatively thick wax layer providing the improved sliding properties for a long duration are obtainable by this ski wax material.

US specification no. 4308633 proposes a ski wax material comprising a carrier sheet of a porous and absorptive material such as cellulose paper carrying a layer of wax. However such a material is not capable of retaining wax in sufficient quantities to make the product an effective commercial proposition.

It would be desirable to be able to provide a ski wax material capable of easily and quickly forming a uniform wax layer having a suitable thickness, and of eliminating the problems described above, as well as to provide a method for producing a ski wax material capable of easily and quickly forming a uniform wax layer having a suitable thickness, and a method for applying wax on a sliding surface of a ski capable of easily and quickly forming a uniform wax layer having a suitable thickness.

According to a first aspect of the present invention, there is provided a ski wax material in the form of a sheet comprising a sheet substrate of non-woven fabric composed of heat-resistant fibres impregnated with heat-meltable solid wax, the amount of wax retained within the material falling within the range of 200 to 500 g/m² of the material.

According to a further aspect of the invention, there is provided a method for the production of the ski wax material in the form of a sheet comprising immersing a sheet substrate composed of heat-resistant fibres is melted ski wax and pulling out the sheet substrate from the wax or applying melted ski wax onto the sheet substrate, thereby allowing the wax to impregnate into the sheet, and solidifying the wax by cooling.

According to a still further aspect of the invention, there is provided a method for applying ski wax onto a sliding surface of a ski, comprising laying the aforementioned ski wax material on the sliding surface of the ski, placing a heat source at a temperature above the melting point of the ski wax onto the ski wax material and sliding the wax material and the heat source together along the sliding surface while keeping the ski wax material in contact with the sliding surface.

By way of example only, the aspects of the invention will now be described in greater detail with reference to the accompanying drawings of which:
Fig. 1 schematically shows the ski wax material according to the present invention;
Figs. 2 and 3 show portions of preferred sheet substrate of the material of Fig. 1;
Figs. 4 and 5 schematically illustrate the method of applying wax onto skis using the material of the invention.

The ski wax material according to the invention comprises a sheet substrate composed of heat-resistant fibers and heat-meltable solid wax impregnated in the sheet substrate and/or adhered to the surface of the sheet substrate. That is, the wax is contained as solid material in a form of product of the present ski wax material, and it is melted by heating when the material is used for the waxing of skis. The ski wax may be retained on either only one side or both sides of the sheet substrate.

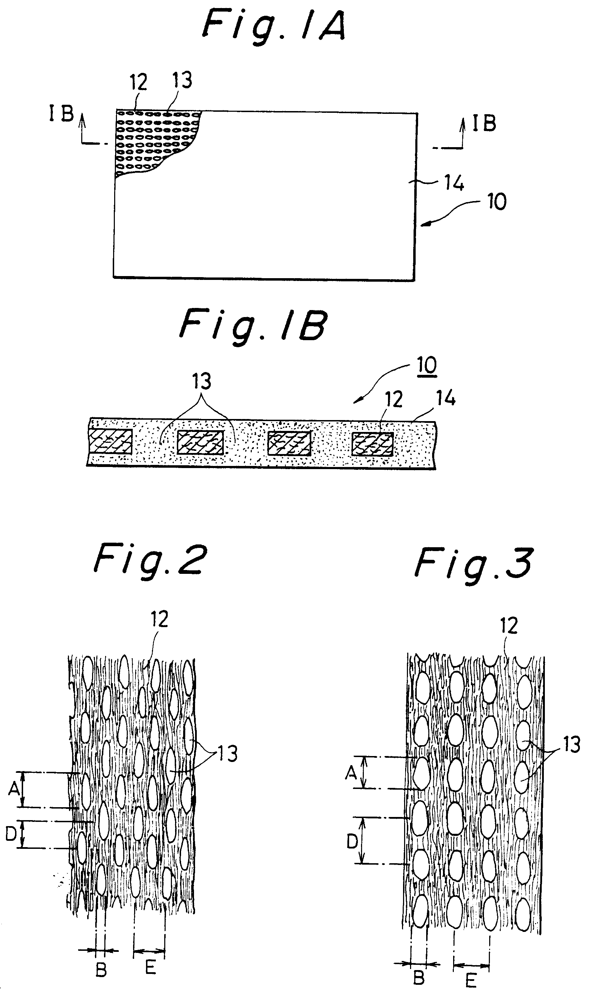

Fig.1 schematically presents the ski wax material (10) according to the invention. Fig. 1A is a plane view of the ski wax material (10) according to the invention, wherein the wax (14) is partly removed at the upper-left side corner thereof to allow the sheet substrate (12) to be observed. Fig. 1B is a partial cross-sectional view of the present ski wax material at IB - IB of Fig. 1A, the sheet substrate (12) having perforated holes (13) described in detail hereinafter.

Non woven fabric which is used as sheet substrate in the present invention a flexible material composed of heat resistant fibers. It preferably contains sufficient space for retaining the ski wax, the space opening at the surface of the substrate, and shows some elasticity at least in the direction of its thickness.

The fibers constituting the non-woven fabric are not particularly limited, and they may be selected from natural fibers, synthetic fibers, metal fibers, inorganic fibers and the like. The fibers are preferably heat-resistant within the temperature range of from 130°C to 180°C, i.e., above the melting point of the conventional ski waxes. The term "heat-resistant" means that they are not deformed or denaturated at the given temperature. The thickness of the fibers are also not particularly limited; however they are preferably selected from those of 1 to 10 deniers.

The weight per unit area and the thickness of the sheet are also not particularly limited so long as the sheet substrate can retain a sufficient amount of ski wax and can be suitably used for the waxing; however, it preferably has a weight per unit area of 20 to 100 g/m² and thickness of 0.1 to 0.6 mm.

A non-woven fabric which is used as sheet substrate, has a, larger space between the fibers as compared with the other material, i.e., it can retain a larger amount of wax per unit area than woven fabrics and the like, and hence it enables to form the ski wax material of the present invention with a sheet substrate having a smaller weight per unit area.

Further, it is preferable that the sheet substrate of the present invention has numerous perforated holes distributed on the whole surface thereof. Such holes enable the sheet substrate become to retain even more ski wax per unit area with the same thickness of the sheet substrate. In addition, dust on the sliding surface would be absorbed in the ski wax present in the holes during the waxing using the present wax material, and thereby any undesirable dust on the sliding surface may be removed.

The size and number of the hole are not particularly limited insofar as the sheet substrate can retain a sufficient amount of the ski wax and the function of the substrate sheet separating the heat source and the sliding surface during the waxing is not deteriorated. However, the sheet substrate generally has the holes in a ratio of from 5 to 40 %, preferably 10 to 25 % of the surface area of the substrate when represented by a ratio of the total area of the holes against the whole area of the sheet and in a number of from 100,000 to 200,000 holes/m² of the sheet substrate. The shape of the hole is also not particularly limited, and it may be in any suitable shape such as circular, oval, flattened oval, rectangular and the like.

An example of a non-woven fabric having the perforated holes is disclosed in Japanese Patent Application (KOKOKU) No. 36-7274 and is commercially available from Kuraray Co.,Ltd. by the trade name of KURAFLEX ADK900JP418.

Examples of the preferred sheet substrate for the present ski wax material are partly represented in Figs 2 and 3. The sheet substrate (12) shown in Fig. 2 has the perforated holes (13) in the shape of a flattened oval having the longer diameter (A) of 1.75 mm and the shorter diameter (B) of 0.47 mm with the intervals of 3.44 mm (D) and 2.06 mm (E), and the sheet substrate (12) shown in Fig. 3 has the perforated holes (13) in the form of a flattened oval having the longer diameter (A) of 1.85 mm and the shorter diameter (B) of 1.00 mm with the intervals of 2.60 mm (D) and 2.35 mm (E).

The ski wax of the ski wax material according to the present invention may be a conventional ski wax consisting of a paraffin mixture, optionally added with fluorinated compounds and silicone compounds, having a melting point of from about 80°C to 120°C and being solid in the atmospheric temperature. Examples of such ski wax include those commercially available by the trade names TOKO (made in Switzerland) and HOLMEN (made in West Germany).

The size and the shape of the ski wax material in a sheet form according to the present invention are also not particularly limited. However, since the ski wax material is contacted with the heat source and slid along the sliding surface of the ski together with the heat source during the waxing of skis using the ski wax material, it is meaningless to have the width of the material excessive to the width of the ski and the length thereof excessive to the length of the heat source, except for the portion to hold and pull the material. Therefore, the ski wax sheet material of the present invention is generally rectangular with a width of 8 to 10 cm and a length of 10 to 20 cm.

The process for the preparation of the ski wax material in a sheet form will be illustrated hereinafter. The present ski wax material may be produced according to the following procedures. Firstly, the ski wax is melted by heating to 115°C to 120°C in a heating bath, and a sheet substrate cut in any desired shape and size is immersed in the melted wax bath to allow the melted wax to impregnate into and/or adhere to the sheet substrate. Then, the sheet substrate retaining the melted wax is pulled out from the wax bath and immersed into a cold water bath to be cooled and solidified, thereby be fixed on the substrate in solid form. Alternatively, the melt wax retained by the sheet substrate may be solidified by being blown with cold air or the sheet by being placed on a cold plate.

The ski wax material according to the invention may be continuously produced by providing a sheet substrate continuously from a winding roll of the substrate, passing the substrate through a path provided in the heating bath containing the melted wax to impregnate and/or adhere the wax to the substrate, and then winding the substrate retaining the wax on a cooling roll to solidify the wax. The resulted ski wax material in the form of a continuous sheet may be cut in a desired size and shape with a suitable means such as a guillotine cutter.

Further, the ski wax material of the present invention may be also produced by flowing the melt wax in a membrane form down from a slit-shaped opening while passing the sheet substrate continuously or in a successive cut form under the flow of the wax to apply the wax on the surface of the substrate and cooling the wax-retaining substrate so as to solidify the wax.

Furthermore, the ski wax material according to the invention may be produced by taking out the melted wax from the melted wax bath with a surface of a revolving coating roller, transferring the wax retained on the roller onto the sheet substrate which is to move along with the revolution of the coating roller and cooling the wax-retaining substrate to solidify the wax.

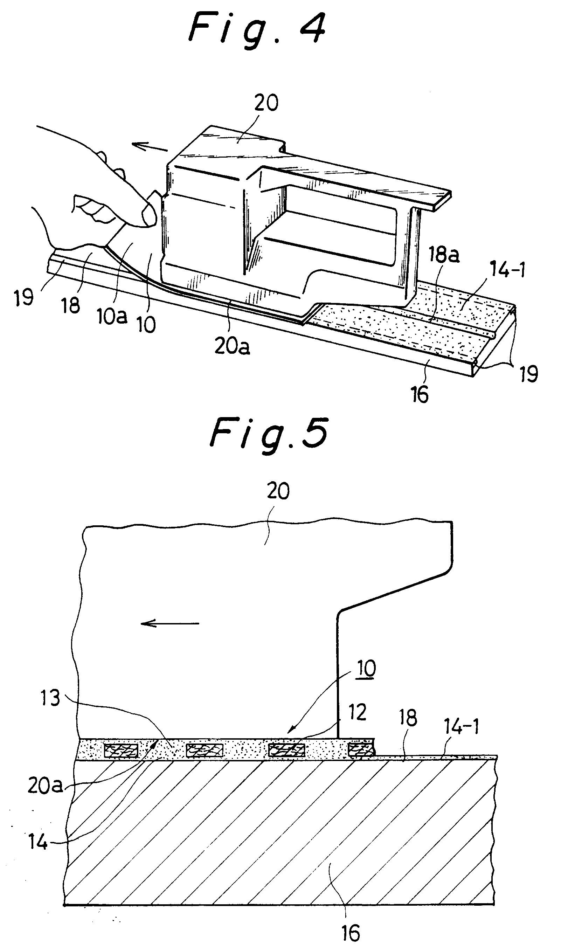

Referring to Figs. 4 and 5, the method for waxing skis by using the ski wax material according to the invention will be illustrated hereinafter. Fig. 4 is a perspective view for illustrating the waxing method according to the invention, and Fig. 5 is a cross-sectional view of the ski, ski wax material of the present invention and the heat source such as iron during the waxing of ski.

Firstly, a ski (16) is placed in such a position that the sliding surface (18) of the ski is faced upward, and the ski wax material in a sheet form (10) is placed on the one longitudinal end of the ski, as a starting point of the waxing, to fully cover in full width of the ski at the end portion. Then, an iron (20) weighing, for example, 600 to 750 g and heated up to a desired temperature is placed on the ski wax material, leaving a portion (10a) for pulling, as the ski wax material is pressurized. The ski wax material of the present invention may be pressurized by the weight of the iron itself, optionally with additional weight applied by the operator, with the surface (20a) of the iron (20) being heated above the melting temperature of the wax. The wax retained by the heated portion of the material is melted and liquified to flow and adhere to the sliding surface of the ski. The iron and the material are then slid together along the sliding surface of the ski in longitudinal direction to the other end of the ski at an appropriate rate by pulling the portion (10a) while maintaining the pressure applied to the material (Fig. 4). During the transfer of the material, the melted wax is applied to the whole sliding surface of the ski, and any excessive wax is not remained on the sliding surface since the surface is rubbed by the sheet substrate with a pressure. The wax layer remained on the sliding surface of the ski is cooled naturally to form a solidified wax layer (14-1) having a substantially uniform thickness. Due to the presence of the sheet substrate between the heated iron and the sliding surface, the heated surface of the iron is prevented from directly contacting with the sliding surface, thereby any thermal damage of the sliding surface by the heated iron can be avoided. Finally, the iron and the material are lifted up from the other end of the ski. When the ski wax material is removed from the sliding surface, all the excessive melted wax is retained in the sheet substrate. Thus, a substantially uniform wax layer is advantageously produced without loss of the wax. The waxing of a ski using the ski wax material according to the invention may be completed in around 2 minutes.

During the waxing, a dust present on the sliding surface of the ski is absorbed in the sheet substrate or transferred into the perforated holes, if present, by floating into the melt wax present between the fibers or in the holes of the substrate Therefore, the dust is advantageously removed from the sliding surface by being captured by the melted wax and does not remain in the applied wax layer. The wax adhered to the edges (19) of the ski may be easily removed by a scraper or the like. Even if the sliding surface of the ski has one or more grooves (18a), the surface of such grooves are also coated with the wax since the melted wax may flow into the grooves during the waxing operation .

The thickness of the wax layer formed by using the ski wax material of the present invention may be easily adjusted by the pressure applied to the material, which may be up to about 50 »m, and can be sufficiently preserved for a long duration during the use.

The waxing of ski with the ski wax material of the present invention retaining the wax only on one side of the sheet substrate may be carried out in the similar way as described above. That is, it may be carried out by contacting the wax-retaining surface of the material and by conducting the same operation as described above.

When waxing the ski using the ski wax material of the invention, it is preferable to apply the pressure to the material only by the weight of the iron itself since a constant pressure is preferable for the wax layer to have a uniform thickness. However, it is also possible to adjust the pressure, for example by slightly lifting the iron, to absorb the melted wax into the sheet substrate and thereby preventing the melted wax from overflowing from the sliding surface of the ski. Accordingly, by using the ski wax material of the present invention, the waxing of skis can be carried out with the lowest amount of the wax without incurring a loss of the wax as well as messing the working place.

Since the skis waxed according to the invention as described above are coated with a wax layer in an appropriate thickness, they can preserve desired sliding properties for a long period.

It is possible to form a uniform wax layer on the sliding surface of the ski only by sliding once the wax material along the surface while applying a pressure to the material. Therefore, the present invention eliminates the laborious and time-consuming operation for removing the excess wax by means of a wax scraper and the like, and thereby enabling to perform the waxing in a short time without wasting any wax.

Further, it is possible to avoid the heat damage of the sliding surface of the ski by the heated iron since the heated iron does not directly contact with the sliding surface because of the presence of the sheet substrate between the iron and the sliding surface. Therefore, even a ski having a heat sensitive sliding surface such as Black Sole can be easily waxed with the wax material of the invention.

### EXAMPLE

The ski wax material according to the invention was produced and used for waxing ski as described below.

### Production of the ski wax material

A sheet substrate (8 cm x 14 cm) was cut from non-woven fabric having perforated holes and composed of long rayon fibers (1.5 deniers) bonded with acrylic binder. The fabric had the weight of 50 g/m², thickness of 0.124 mm, perforated ratio of 10.3 % and the density of the holes of 152,000 holes/m².

The sheet substrate was immersed into the melted ski wax (melting point: 80°C, density: 0.96), pulled out from the wax and cooled to solidify the wax. The ski wax material retaining the wax in an amount of 200 g/m² was obtained.

### Waxing of ski

A ski was waxed by using the ski wax material obtained above and an iron weighing 666 g and heated to 120°C. The waxing was performed by pressurizing the material by weight of the iron and once sliding the material on the sliding surface.

### Result

A wax layer having a substantially uniform thickness of 36.2 »m was formed on the sliding surface of the ski.

## Claims

1. A ski wax material in the form of a sheet (10) comprising a sheet substrate of non-woven fabric composed of heat-resistant fibres impregnated with heat-meltable solid wax (14), the amount of wax (14) retained within the material falling within the range of 200 to 500 g/m² of the material.

2. A ski wax material as claimed in claim 1 in which the sheet substrate (12) has perforated holes (13) therein, the ratio of the total area of the perforated holes (13) to the surface area of the sheet substrate (12) being within the range 5% to 40%.

3. A ski wax material as claimed in claim 2 in which the perforated holes (13) are distributed in the sheet substrate (12) in an amount of 100,000 to 200,000 holes/m² of the sheet substrate.

4. A method for the production of the ski wax material as claimed in claim 1 comprising the steps of applying melted ski wax (14) onto a sheet substrate (12), removing the sheet substrate from the wax and solidifying the wax by cooling.

5. A method as claimed in claim 4 in which the sheet substrate (12) is immersed in the melted ski wax (14) thereby allowing the wax to impregnate the substrate (12).

6. A method for applying wax onto a sliding surface of a ski (16) comprising laying a ski wax material (10) as claimed in claim 1 on the sliding surface (18) of the ski, placing a heat source (20) at a temperature above the melting point of the ski wax (14) onto the ski wax material (10) and sliding the wax material (10) and the heat source (20) together along the sliding surface (18) while keeping the ski wax material (10) in contact with the sliding surface (18).

## Patentansprüche

1. Skiwachsmaterial in Form einer Folie (10), welche ein Foliensubstrat aus Faservlies, bestehend aus hitzebeständigen Fasern, welche mit einem bei Hitze schmelzbaren festen Wachs (14) imprägniert sind, umfaßt, wobei die in dem Material gebundene Menge an Wachs (14) in den Bereich von 200 bis 500 g/m² des Materials fällt.

2. Skiwachsmaterial nach Anspruch 1, bei welchem das Foliensubstrat (12) durchgehende Löcher (13) besitzt, wobei das Verhältnis der Gesamtfläche der durchgehenden Löcher (13) zum Oberflächenbereich des Foliensubstrats in dem Bereich von 5% bis 40% liegt.

3. Skiwachsmaterial nach Anspruch 2, bei welchem die durchgehenden Löcher (13) in dem Foliensubstrat (12) in einer Menge von 100.000 bis 200.000 Löcher/m2 des Foliensubstrats aufgeteilt sind.

4. Verfahren zur Herstellung des Skiwachsmaterials nach Anspruch 1, welches die Schritte umfaßt: Auftragen des geschmolzenen Skiwachses (14) auf ein Foliensubstrat (12), Entfernen des Foliensubstrats von dem Wachs und Aushärten des Wachses durch Abkühlen.

5. Verfahren nach Anspruch 4, bei welchem das Foliensubstrat (12) in das geschmolzene Skiwachs (14) eingetaucht wird, um dadurch dem Wachs zu ermöglichen, das Substrat zu tränken.

6. Verfahren zum Auftragen des Wachses auf eine Gleitfläche eines Skis (16), welches umfaßt: Auflegen eines Skiwachsmaterials (10), wie es in Anspruch 1 beansprucht ist, auf die Gleitfläche (18) des Skis, Plazieren einer Wärmequelle (20) mit einer Temperatur oberhalb des Schmelzpunktes des Skiwachses (14) auf das Skiwachsmateriel (10) und Verschieben des Wachsmaterials (10) und der Wärmequelle (20) zusammen entlang der Gleitfläche (18), während das Skiwachsmaterial (10) in Kontakt mit der Gleitfläche (18) gehalten wird.

## Revendications

1. Matériau de fart pour ski, en forme d'une feuille (10) comportant un substrat en feuille d'étoffe non-tissée constituée de fibres thermo-résistantes imprégnées de fart solide thermofusible (14), la quantité de fart (14) retenue dans le matériau tombant dans la plage de 200 à 500 g/m² du matériau.

2. Matériau de fart pour ski selon la revendication 1, caractérisé en ce que le substrat en feuille (12) est percé de trous (13), le rapport de la surface totale des trous percés (13) sur la surface du substrat en feuille (12) étant compris entre 5% et 40%.

3. Matériau de fart pour ski selon la revendication 2, caractérisé en ce que les trous percés (13) sont répartis dans le substrat en feuille (12) suivant une quantité de 100 000 à 200 000 trous/m² du substrat en feuille.

4. Procédé de fabrication du matériau de fart pour ski selon la revendication 1, caractérisé en ce qu'il comprend les étapes consistant à appliquer du fart en fusion pour ski (14) sur un substrat en feuille (12), retirer le substrat en feuille du fart et solidifier le fart par refroidissement.

5. Procédé selon la revendication 4, caractérisé en ce que le substrat en feuille (12) est immergé dans le fart pour ski en fusion (14), ce qui permet au fart d'imprégner le substrat (12).

6. Procédé pour appliquer du fart sur une surface de glissement d'un ski (16), consistant à appliquer un matériau de fart pour ski (10) selon la revendication 1 sur la surface de glissement (18) du ski, placer une source de chaleur (20) à une température au-dessus du point de fusion du fart pour ski (14) sur un matériau de fart pour ski (10) et coulisser le matériau de fart (10) et la source de chaleur (20) ensemble de long de la surface de glissement (18) tout en maintenant le matériau de fart pour ski (10) en contact avec la surface de glissement (18).
